Europäisches Patentamt

European Patent Office

Office européen des brevets

(11) Publication number: **0 152 974**
**B1**

(12) **EUROPEAN PATENT SPECIFICATION**

(45) Date of publication of patent specification: **09.05.90**

(51) Int. Cl.⁵: **G 06 F 11/10**

(21) Application number: **85200075.1**

(22) Date of filing: **24.01.85**

(54) **Arrangement for checking the parity bit-containing bit groups.**

(30) Priority: **06.02.84 NL 8400358**

(43) Date of publication of application:
**28.08.85 Bulletin 85/35**

(45) Publication of the grant of the patent:
**09.05.90 Bulletin 90/19**

(84) Designated Contracting States:
**BE DE FR GB IT SE**

(56) References cited:
**EP-A-0 079 494**
**US-A-3 825 894**

**IBM TECHNICAL DISCLOSURE BULLETIN, vol.
19, no. 3, August 1976, page 853, New York, US;
L.J. KOBESKY: "Diagnostic parity error forcing
mechanism"**
**IBM TECHNICAL DISCLOSURE BULLETIN, vol.
11, no. 7, December 1968, pages 882,883, New
York, US; K. LOW: "Shared parity checker"**

(73) Proprietor: **N.V. Philips' Gloeilampenfabrieken
Groenewoudseweg 1
NL-5621 BA Eindhoven (NL)**

(72) Inventor: **Verheul, Hans Hendrik
c/o INT. OCTROOIBUREAU B.V. Prof. Holstlaan 6
NL-5656 AA Eindhoven (NL)**
Inventor: **Matena, Jan
c/o INT. OCTROOIBUREAU B.V. Prof. Holstlaan 6
NL-5656 AA Eindhoven (NL)**

(74) Representative: **Van Schaik, Johannes
Wilhelmus et al
INTERNATIONAAL OCTROOIBUREAU B.V. Prof.
Holstlaan 6
NL-5656 AA Eindhoven (NL)**

## Description

The invention relates to an arrangement for checking the parity of parity bit-containing bit groups, wherein a number $n$ of bit groups is checked in parallel.

Such an arrangement is known from US—A—3.825.894.

If in a system such as, for example, a telephone exchange, the parity of a bit group has to be determined in a large number of places, or the parity of many bit groups have to be checked in one place, this requires a large investment in equipment, such as parity generators and converters. In addition, the result of the comparison between the transmitted parity of the bit group and the parity generated by the parity generator has to be checked, which requires additional hardware. So as to ensure the reliability of the system all the additional equipment must moreover also be supervised.

Although the arrangement according to US—A—3.825.894 aims to simplify the parity checking arrangement, it still is quite complicated.

The invention has for its object to provide an arrangement for checking the parity of a parity bit-containing bit groups, with the aid of which the parity can be checked with a very simple arrangement using only few means and with which also the reliability of these means can be supervised. According to the invention, an arrangement for checking the parity of parity bit-containing bit groups is characterized in that the arrangement comprises $n$ parity generators (PG1, PG2, PG3) each coupled to one bit group for generating the parity of the relevant bit group, that the arrangement further comprises $n$ comparison circuits each having first and second inputs and an output, that an output of a parity generator is always connected to a first input of a comparison circuit, that the parity bit of each of the bit groups is applied to the second input of the comparison circuit but in such manner that at a specific comparison circuit the generated parity bit applied to the first input is derived from a different bit group than the parity bit applied to the second input, that the outputs of the comparison circuits are connected to a logic network for generating, at an output of the logic network, a logic signal which supplies a first value if all the generated parity bits are in agreement with the parity bit contained in the bit groups and a second value if one of the generated parity bits is not in agreement with the parity bit of the associated bit group.

An advantageous embodiment of an arrangement for checking the parity of parity bit-containing bit groups is characterized in that one of the parity generators has a control input for inverting the parity bit generated at the output of that parity generator, as a result of which the signal generated at the output of the logic network is inverted if the logic network has operated in the prescribed way.

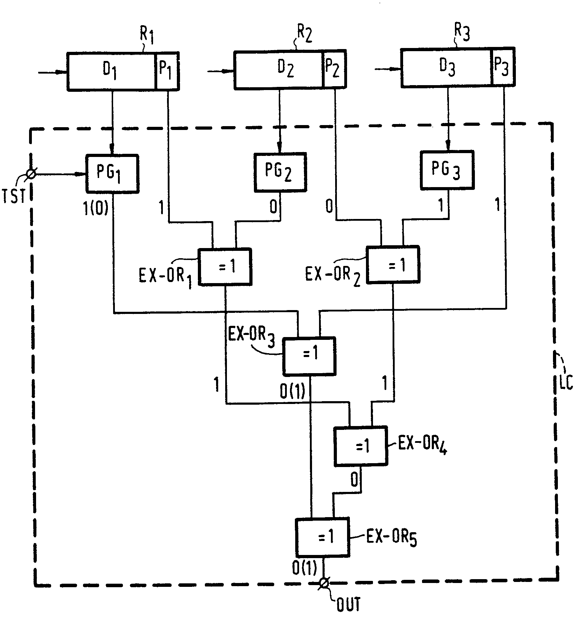

An embodiment of the invention will now be described, by way of example, with reference to the accompanying drawing, the sole Figure of which shows in block schematic form an arrangement for checking the parity of parity bit containing bit groups.

References $R_1$, $R_2$ and $R_3$ denote a number of binary registers for storing a bit group consisting of a data portion $D_1$, $D_2$ and $D_3$, respectively and a parity portion $P_1$, $P_2$ and $P_3$, respectively. The invention is however not limited to embodiments comprising three registers. The invention can also be used without any drawbacks for any other number of registers. Parity generators PG1, PG2 and PG3 for generating the parity of the bit group data portion present in the data portion of the register are connected to an output of each data portion $D_1$, $D_2$ and $D_3$, of the registers $R_1$, $R_3$ and $R_3$, respectively.

An output of each of the parity generators $PG_1$, $PG_2$ and $PG_3$ and an output of each of the parity portions $P_1$, $P_2$ and $P_3$ of the registers $R_1$, $R_2$ and $R_3$ are together connected to a logic circuit LC of which the exclusive OR-circuits $EX-OR_1$, $EX-OR_2$, $EX-OR_3$ form part. This is effected in such a way that the inputs of these circuits are connected in a cyclic sequence to outputs of different parity portions and parity generators. This means that the output of the parity portion $P_1$ of register $R_1$ is connected to a first input of the exclusive OR-circuit $EX-OR_1$, whilst the output of parity generator $PG_2$ is connected to a second input of the exclusive OR-circuit $EX-OR_1$. Similarly, the output of the parity portion of register $R_2$ is connected to the first and the output of parity generator $PG_3$ to the second input of $EX-OR_2$ and the output of the parity portion of register $R_3$ is connected to the first and the output of parity generator $PG_1$ to the second output of $EX-OR_3$. Outputs of the exclusive OR-circuits $EX-OR_1$ and $EX-OR_2$ are connected to first and second inputs, respectively of a further exclusive OR-circuit $EX-OR_4$, whilst an output of the exclusive OR-circuit $EX-OR_5$ and an output of $EX-OR_4$ are connected to a fifth exclusive OR-circuit $EX-OR_5$. An output of $EX-OR_5$ is connected to an output which also constitutes the output of the logic circuit LC.

The checking circuit operates as follows. If the parities generated by the parity generators $PG_1$, $PG_2$ and $PG_3$ correspond to the parity which was transmitted and stored in the parity portions $P_1$, $P_2$ and $P_3$ of the registers, then at output OUT a logic value of a first type will be supplied. In the example shown in the drawing $PG_1=P_1="1"$, $PG_2=P_2="0"$ and $PG_3=P_3="1"$ a signal having the logic value "0" will occur at output OUT. In all other cases in which the generated parity ($PG_i$) corresponds to the parity contained in the parity portion $P_i$ logic value "0" will always appear at the output OUT. Consequently, this circuit has the advantage that for every three bit groups ($n$-bit groups in general) only one output need to be checked. If an error occurs, so that one of the parity generators generates a parity which differs from the parity bit stored in the register, then the output OUT will assume the second logic value ("1"), which is indicative of the occurrence of the error.

Now it may happen that a malfunction occurs in the logic circuit LC causing a logic signal of the first type to be always supplied from the output, so that prevailing errors cannot be indicated anymore. To check this, one of the parity generators $PG_1$, $PG_2$ or $PG_3$ (in the drawing $PG_1$) is given a test input TST. Applying a suitable signal to the test input TST causes the output of the relevant parity generator ($PG_1$ in the drawing) to be inverted. When the logic circuit supplies from the output OUT a logic signal of the first (second) value this must result in this value being inverted to the second (first) value. If no inversion occurs this indicates that the logic circuit LC is operating incorrectly. Inverting one of the parity generators at regular time intervals prevents a circuit (*i.e.* the logic circuit LC) which becomes defective remaining unnoticed.

**Claims**

1. An arrangement for checking the parity of parity bit-containing bit groups, wherein a number *n* of bit groups is checked in parallel characterized in that the arrangement comprises *n* parity generators ($PG_1$, $PG_2$, ... $PG_n$) each coupled to a respective bit group for generating the parity of the relevant bit group, that the arrangement further comprises *n* comparison circuits each having first and second inputs and an output, that an output of each parity generator is always connected to a first input of a respective comparison circuit, that the parity bit of each of the bit groups is applied to the second input of a respective comparison circuit in such manner that at a specific comparison circuit the generated parity bit applied to the first input is derived from a different bit group from the parity bit applied to the second input, that the outputs of the comparison circuits are connected to a logic network for generating, at an output of a logic network, a logic signal which has a first value if all the generated parity bits are in agreement with the parity bit contained in the bit groups and has a second value if one of the generated parity bits is not in agreement with the parity bit of the associated bit group.

2. An arrangement for checking the parity of parity bit-containing bit groups as claimed in Claim 1, characterized in that one of the parity generators has a control input for inverting the parity bits generated at the output of that parity generator, in response to which the signal generated at the output of the logic network is inverted if the logic network has operated in the prescribed manner.

**Patentansprüche**

1. Anordnung zur Paritätsüberwachung von Paritätsbits enthaltenden Bitgruppen, wobei eine Anzahl gleich n Bitgruppen in Parallelbetrieb überprüft wird, dadurch gekennzeichnet, daß die Anordnung n Paritätsgeneratoren ($PG_1$, $PG_2$, ... $PG_n$) aufweist, die mi je einer betreffenden Bitgruppe gekoppelt sind zum Erzeugen der Parität der betreffenden Bitgruppe, daß die Anordnung weiterhin n Verlgleichkreise aufweist mit je einem ersten und einem zweiten Eingang und mit einem Ausgang, daß ein Ausgang jedes Paritätsgenerators immer mit einem ersten Eingang eines betreffenden Vergleichskreises verbunden ist, daß das Paritätsbit jeder der Bitgruppen dem zweiten Eingang eines betreffenden Verlgeichskreises derart zugeführt wird, daß bei einem spezifischen Vergleichskreis das erzeugte, dem ersten Eingang zugeführte Paritätsbit von einer anderen Bitgruppe abgeleitet ist als das Paritätsbis, das dem zweiten Eingang angeboten wird, daß die Ausgänge der Vergleichkreise mit einem logischen Netzwerk verbunden sind zum an einem Ausgang des logischen Netzwerkes Erzeugen eines logischen Signals, das einen ersten Wert hat, wenn alle erzeugten Paritätsbits mit dem Paritätsbit in den Bitgruppen in Übereinstimmung sind, und einen zweiten Wert hat, wenn eines der erzeugten Paritätsbits mit dem Paritätsbit der zugeordneten Bitgruppe nicht in Übereinstimmung ist.

2. Anordnung zur Paritätsüberwachung von Paritätsbits enthaltenden Bitgruppen nach Anspruch 1, dadurch gekennzeichnet, daß einer der Paritätsgeneratoren einen Steuereingang hat zum Invertieren der an dem Ausgang dieses Paritätsgenerators erzeugten Paritätsbits, wodurch das an dem Ausgang des logischen Netzwerkes erzeugte Signal invertiert wird, wenn das logische Netzwerk auf die vorgeschriebene Weise funktioniert hat.

**Revendications**

1. Dispositif pour le contrôle de la parité de groupes de bits contenant des bits de parité, dans lequel un nombre *n* de groupes de bits est contrôlé en parallèle, caractérisé en ce qu'il comprend *n* générateurs de parité ($PG_1$, $PG_2$, ... $PG_n$) couplés chacun à un groupe de bits pour générer la parité du groupe de bits en question, qu'il comprend, en outre, *n* circuits de comparaison comportant chacun une première et une seconde entrée, ainsi qu'une sortie, qu'une sortie d'un générateur de parité est toujours connectée à une première entrée d'un circuit de comparaison respectif, que le bit de parité de chacun des groupes de bits est appliqué à la seconde entrée d'un circuit de comparaison respectif d'une manière telle, qu'à un circuit de comparaison spécifique, le bit de parité généré appliqué à la première entrée soit dérivé d'un groupe de bits différent de celui du bit de parité appliqué à la seconde entrée, que les sorties des circuits de comparaison sont connectées à un réseau logique pour générer, à une sortie d'un réseau logique, un signal logique qui a une première valeur si tous les bits de parité générés sont en accord avec le bit de parité contenu dans les groupes de bit et une seconde valeur, si un des bits de parité généré n'est pas en accord avec le bit de parité du groupe de bits associé.

2. Dispositif pour le contrôle de la parité de groupes de bits contenant des bits de parité suivante la revendication 1, caractérisé en ce qu'un des générateurs de parité comporte une entrée de commande pour inverser les bits de parité générés à la sortie de ce générateur de parité, en réponse à quoi le signal généré à la sortie du réseau logique est inversé si le réseau logique à fonctionné de la manière prescrite.